# EUROPEAN PATENT SPECIFICATION

(11) **EP 3 642 171 B1**
(45) Date of publication and mention of the grant of the patent: **30.06.2021**
(21) Application number: 17752481.6
(22) Date of filing: 19.06.2017
(51) Int. Cl.: C04B 28/14, C04B 40/00, C04B 103/65, C04B 111/27

(54) **PROCESS FOR PRODUCING A GYPSUM MIXTURE THAT IS PERMANENTLY RESISTING DAMP AND PLASTERBOARD MADE FROM ACCORDINGLY PRODUCED GYPSUM MIXTURE**
VERFAHREN ZUM HERSTELLEN EINER DAUERHAFT FEUCHTIGKEITSBESTÄNDIGEN GIPSMISCHUNG UND GIPSKARTONPLATTE GEMACHT AUS DER DERARTIG HERGESTELLTEN GIPSMISCHUNG
PROCÉDÉ DE PRODUCTION D'UN MÉLANGE DE GYPSE RÉSISTANT DE FAÇON PERMANENTE À L'HUMIDITÉ ET PLAQUE DE PLÂTRE PRÉPARÉE À PARTIR DU MÉLANGE DE GYPSE AINSI PRODUIT

(43) Date of publication of application: 29.04.2020
(73) Proprietor: Töröcsik, Ferencné, 5905 Orosháza (HU)
(72) Inventor: Töröcsik, Ferencné, 5905 Orosháza (HU)
(74) Representative: Danubia Patent & Law Office LLC
(86) International application number: PCT/HU2017/050024
(87) International publication number: WO 2018/234835

(56) References cited:
- EP-A1- 1 112 986
- WO-A1-00/63294
- WO-A1-2011/067601
- WO-A1-2013/004621
- WO-A1-2016/062867
- WO-A2-2011/087781
- DE-A1-102005 009 234
- JP-A- H1 171 162
- US-A1- 2008 206 599
- US-A1- 2014 142 215

## Description

The present invention relates to a process for the production of a thermally resistant gypsum blend for the production of plasterboards, wherein the dry component of the gypsum blend is made by mixing dry plaster with a powdered adjuvant, and then the wet component of the gypsum blend is prepared by mixing liquid chemicals and water, then mixing dry and wet ingredients thus prepared, and also relates to a gypsum plasterboard made of gypsum mixture according to the invention.

Plasterboard sheets made of plaster and paperboards having a sandwich structure are widely used in the construction industry, as they can be used easily, quickly and simply to build partition walls or even wall elements of dry built buildings having a load bearing framework. Walls with good thermal insulation and soundproofing properties can be built of these boards by using e.g. mineral wool.

However, plasterboard has the essential property of vapor-balancing, ie. absorbing high ambient humidity, and allows moisture in the ambient air for drier environments, thus controlling the humidity of the room's air space. While this property is favourable for eg. living rooms, it can be a drawback for wet rooms eg. bathrooms and kitchens, as gypsum absorbing large amount of moisture swells, the shape of the wall structure is distorted and its resistance decreases.

Therefore, in wet rooms, especially in bathrooms and kitchens, impregnated gypsum plasterboard sheets are used, which have limited absorbent capacity.

For example, patent publication CA2246490 (C) discloses a method and building materials suitable for enhancing resistance to water absorption of composite materials containing gypsum and cellulose fibers. The water resistance of silicone-impregnated gypsum/wood fiber building panel is improved by the addition of siloxane emulsion and a catalyst emulsion by adding siloxane emulsion mixed with water to the wet mixture of calcium sulphate and cellulose fiber.

Document US 20090036572 A1 discloses a process for rendering plaster-based products water repellent. During the process a material containing polysiloxane and pregelatinised starch is added to gypsum. Polysiloxane is added as an oil, or an emulsion of oil and water.

WO2015051822 A1 discloses a process for the preparation of gypsum board, in which cut off residues of plasterboard stacks are added to mixed liquid plaster. As further additives, plasterboard powder and hydrophobizing material - stucco, water, silicone oil, foaming agent, flowing agent - are added.

CA 2317600 A1 discloses a process for improving water resistance of plaster by the addition of a wax emulsion consisting of a sulphate anionic surfactant and a water-soluble, non-ionic surfactant having foam forming properties. The product is a paper-covered gypsum plasterboard.

CN 104261863 discloses a process in which a coal ash is mixed into the plaster to form a slag like material. Water and foaming agent, hydrogenated silicone oil, modified starch, sodium trimetaphosphate, paper fiber are added into the plaster with ash and the mixture is driven in between two sheets of paper.

In the process described by document EP 1778457 A2 siloxane and a magnesium oxide catalyst are added to gypsum mixed with water to achieve siloxane be mixed homogeneously. Siloxane is converted into an aqueous emulsion without a chemical emulsifier. The process can be used to produce a highly water-resistant gypsum blend.

DE102005009234 discloses a process for producing a water resistant gypsum mixture for making plasterboard comprising the steps of
- preparing a wet component of a gypsum mixture by mixing water, dry plaster, plasticizer, starch and further ingredients
- preparing a wet component by mixing compound A comprising a polysiloxane with compound B salt of a metal or mineral acid of any group IIIA-VIIIA, IB or IIB element and evtl. further additives. Such a hydrophobing agent is obtained by emulsifying a partially or completely neutralized substance of a copolymer of a vinyl compound and an unsaturated dicarboxylic acid or its anhydride having 200-500 acid value or its derivative (=component B) with an organosiloxane (=methyl-hydrogen-polysiloxane) having a hydrogen atom bonded to a silicon atom (= component A) in the weight ratio of 20:1 to 1:20 in the presence of an alkali compound in water . This wet component is blended with a hydraulic inorganic composition in order to obtain a water-resistant gypsum board.

JPH1171162 discloses a water repellent composition comprising a wax and a styrene (meth) acrylic copolymer comprising at least some active hydrogen.

These impregnated or otherwise treated gypsum boards tolerate about 80% humidity at about 20 °C without losing stability. Gypsum boards treated in this way also control humidity, but absorb much less moisture than sheets without impregnation. Impregnation is usually carried out with a silicone resin dissolved in organic solvents. Impregnated gypsum boards can also be made in a form having low combustibility, but the permissible temperature on the surface of the sheet is at most 45 °C.

Thus, it is an object of the present invention to provide a gypsum blend being permanently resistant the environments saturated by moisture and having moisture absorption of at most 2% on at least 40 °C in an environment of 100% relative humidity and measured by means of a standard 40 ^{∗} 40 ^{∗} 160 mm solid gypsum brick test body.

Our aim is also to reduce mist absorption on the surface of gypsum brick test body as well in the event of a decrease in the environmental moisture concentration to avoid surface solubility and spreadability when continuously contacting with water or dampish environment, and standard capillary water absorption does not exceed a value of 2%, and the gypsum test body regain its original, dry mass after removed from water.

It is also an object of the invention to provide a plasterboard containing a gypsum mixture according to the invention, which has the advantageous properties of the gypsum mixture of the present invention even without an isolating layer well known in the prior art.

In this specification, terms like humidified or saturated vapor mean the relative humidity of the environment at or near 100%.

One of the greatest advantages of plasterboard made of saturated vapor resistant gypsum mixture according to the invention is that its thickness does not change, so it does not swell that would lead to deterioration of stability. Of course, for production of plasterboard made of saturated vapor resistant gypsum mixture according to the invention gypsum mixture is filled in between two impregnated sheets of paper, too, but this impregnation serves to protect the paper against moisture yet present in the mixture up to setting.

Above objects of the invention is achieved by working out a process for producing a gypsum mixture permanently resistant to saturated vapor, e.g. for making plasterboards, comprising the step of making dry component of a gypsum mixture by mixing dry plaster with a powdered admixture, then preparing a wet component of the gypsum blend by mixing liquid chemicals and water, and mixing the dry and wet components thus prepared, and for making the dry component of the gypsum mixture 93-99.9 % by weight of dry gypsum and 0.1-7% by weight of polysaccharide-derived cellulose are mixed, and for preparing the wet component of the gypsum blend liquid ingredients A, B, C, D are mixed, wherein ingredient A is aqueous emulsion containing methyl silicone oil, ingredient B is aqueous polymer dispersion, ingredient C is a plasticizer additive based on modified acrylate polymer and ingredient D consists of water, and ratio A: B: C: D of ingredients A, B, C, D expressed by w% in this order is 10-90: 2-50: 0.2-15: 4-70.

The dry component of the gypsum mixture comprises 97 to 99.8 w% of gypsum and polysaccharide cellulose in the range of 0.2 to 3% by weight advantageously.

The aqueous emulsion containing methyl silicon oil using as ingredient A of wet component of the gypsum mixture is prepared from 20 to 90% by weight of polymethyl siloxane and 10-80w% of aqueous emulsifier containing at least 2% by weight of a long chain alcohol, preferably C10 polymer ethoxylated alcohol.

The aqueous emulsion containing methyl silicon oil using as ingredient A of wet component of the gypsum mixture is prepared preferably from 40 to 80% by weight of polymethyl siloxane and 20-60 w% of aqueous emulsifier containing at least 2% by weight of a long chain alcohol, preferably C10 polymer ethoxylated alcohol.

The aqueous polymer dispersion using as ingredient B of wet component of the gypsum mixture is prepared from 3 to 50 w% of a blend containing acrylic acid ester, methacrylic acid ester and styrene, and 50-97% of a dispersing agent.

The aqueous polymer dispersion using as ingredient B of wet component of the gypsum mixture is prepared from 5 to 30 w% of a blend containing acrylic acid ester, methacrylic acid ester and styrene, and 70-95% of a dispersing agent.

The plasticizer additive based on modified acrylate polymer used as ingredient C of wet component of the gypsum mixture contains 0.5 to 20 w% alkali metal oxide and 0.01 to 2 w% alkali metal chloride.

The plasticizer additive based on modified acrylate polymer used as ingredient C of wet component of the gypsum mixture contains 1 to 10 w% alkali metal oxide and 0.02 to 1,2 w% alkali metal chloride.

The ratio A: B: C: D of ingredients A, B, C, D expressed by w% in this order is 20-80: 4-40: 0.5-8: 8 -40.

The objects of the invention is achieved also providing a plasterboard plate made of gypsum mixture according to any one of claims 1 to 9 arranged between lower and upper sheets of paper.

The invention will now be described in more details, and by way of a preferred example.

The preparation of a permanently damp resistant gypsum mixture according to the invention is accomplished in three steps: 1/ the dry component of the gypsum mixture is made by mixing dry plaster with powdered additive according to the invention. 2/ the wet component of the gypsum mixture is prepared by mixing liquid ingredients and water, and 3/ the dry and wet components thus prepared are mixed, that is, a plaster mass is produced.

In above step 1^{st} of the process according to the invention, by manufacturing the dry component of the gypsum mixture according to the invention, 93 to 99.9% by weight of dry gypsum is mixed with 0.1 to 7% by weight of polysaccharide originated cellulose. In a preferred embodiment of the process according to the invention, by manufacturing the dry component of the gypsum mixture according to the invention, 97 to 99.8% by weight of dry gypsum is mixed with 0.2-3% by weight of polysaccharide originated cellulose. The stirring is carried out in a bladed powder mixer, pan grinder or similar device in a manner well known to the person skilled in the art.

In **2^{nd}** step of the process according to the invention, four different liquid ingredients are mixed in order to prepare the wet component of the gypsum mixture of the invention:
- Ingredient A: an aqueous emulsion containing methyl silicone oil,
- Ingredient B: aqueous polymer dispersion,
- Ingredient C: modified acrylate polymer based plasticizer admixture, and
- Ingredient D: water.

In preparation of ingredient **A** aqueous emulsion containing methyl silicon oil is prepared from 20 to 90% by weight of polymethyl siloxane and 10-80w% of aqueous emulsifier containing at least 2% by weight of a long chain alcohol, preferably C10 polymer ethoxylated alcohol. In a preferred embodiment, component A is prepared from 40 to 80% by weight of polymethyl siloxane and 20-60 w% of aqueous emulsifier containing at least 2% by weight of a long chain alcohol, preferably C10 polymer ethoxylated alcohol. The ratio of ingredient A in the wet component of gypsum mixture is 10 to 90% by weight, preferably 20 to 80%, of the total weight of the A + B + C + D ingredients of the wet component.

In preparation of ingredient **B** aqueous polymer dispersion is prepared from 1.2 to 18.75 w% of acrylic acid ester, 1.2 to 18.75% of methacrylic acid ester, 0.6 to 12.5% of styrene and 50 to 97% of a dispersing agent. In a preferred embodiment, ingredient B is preferably prepared of 2 to 11.25% acrylic acid ester, 2-11.25% methacrylic acid ester, 1-7.5% styrene and 70 to 95% dispersant. The proportion of ingredient B in the wet component of the gypsum mixture is 2-50% by weight, preferably 4-40% of the total weight of A + B + C + D ingredients.

In preparation of ingredient **C** a modified acrylate polymer based plasticizer additive is prepared from 0.5 to 20% by weight of an alkali metal oxide, e.g. Na2O, and 0.01 to 2% of an alkali metal chloride e.g. NaCl, and 99.49 to 78% water. In a specific embodiment, ingredient C is preferably prepared from 1 to 10% by weight of an alkali metal oxide, e.g. Na2O, 0.02 to 1.5% by weight of an alkali metal chloride e.g. NaCl, and 98.98 to 88.50% of water. The ratio of ingredient C in the wet component of the gypsum mixture is 0.2% to 15% by weight of the total weight of the A + B + C + D components, preferably from 0.5 to 8% by weight.

As ingredient **D** water is added to the mixed A + B + C ingredients so that, the ratio of water is 4-70 w%, preferably between 8% and 40 w% of the total weight of the A + B + C + D ingredients in the wet component of the gypsum mixture.

In Step **3^{rd}** step of the process according to the present invention, a gypsum mass is prepared by mixing the dry component made by step 1^{st} of the process according to the invention with the wet component produced in 2^{nd} step of the process so that, the ratio of the dry component in the plaster mass is 40-80 w%, preferably 50-70 w% and the ratio of the wet component is 20-60%, preferably 50-30%.

### Example:

Gypsum mixture permanently resistant to saturated vapor according to the present invention was prepared by dry mixing 98 % by weight gypsum and 2% polysaccharide originated cellulose for making the dry component of the gypsum blend. Mixing was done in a bladed powder mixer.

Subsequently, four different liquid ingredients A, B, C, D were mixed to form the wet component of the gypsum blend; aqueous emulsion containing methyl silicon oil is prepared as ingredient A from 50 % by weight of polymethyl siloxane and 50 w% of aqueous emulsifier containing 2% by weight of C10 polymer ethoxylated alcohol; an aqueous polymer dispersion was prepared as ingredient B from 15% acrylic acid ester, 15% methacrylic acid ester and 5% styrene and 65% dispersant; and modified acrylate polymer-based granulating additive was prepared as C component from 10w% Na2O, 12w% NaCl and 78w% water.

Water as ingredient D was added to the mixed A + B + C ingredients so that, the content of water was 20 w%, content of ingredient A was 60 w%, the ratio of ingredient B was 12 w% and content of ingredient C was 8 w% to the total mass of mixed A + B + C + D ingredients of the wet component of the gypsum mixture.

Subsequently, gypsum mixture was prepared by mixing the dry component of the gypsum mixture with the wet component so that the proportion of the dry component in plaster mass was 70% and the wet component was 30% by weight.

Using a gypsum mixture made according to the exemplary embodiment above, a gypsum specimen casting with dimensions of 40 ^{∗} 40 ^{∗} 160 mm was made. The mass of the fully-set casting was weighed and its mass m₁ = 594 g. was found. The sample was heated to 40 ° C in a furnace having 100% relative humidity air environment inside and maintained at this temperature at a pressure of 1.1 bar for 16 hours. The test piece was then weighed again, weight m₂ = 604.9 g was found. The water absorption of the test piece compound was determined as follows: (604.9-594) / 594 ^{∗} 100 = 1.835 w%. So the water absorption of the gypsum mixture did not exceed 2 w% as aimed initially.

Main advantage of the gypsum mixture according to the present invention is that it is permanently resistant to the environments saturated by moisture while having a moisture absorption of at most 2% on at least 40 °C in an environment of 100% relative humidity, in the event of a decrease in the environmental moisture concentration the surface solubility of the gypsum mixture also decreases, spreadability does not occur even continuously contacting with water or dampish environment, and plasterboards containing a gypsum mixture according to the invention also have those advantageous properties of the gypsum mixture according to the present invention.

## Claims

1. A process for producing a gypsum mixture permanently resistant to saturated vapor, e.g. for making plasterboards, comprising the step of making dry component of a gypsum mixture by mixing dry plaster with a powdered admixture, then preparing a wet component of the gypsum blend by mixing liquid chemicals and water, and mixing the dry and wet components thus prepared, ***characterized in that*** for making the dry component of the gypsum mixture 93-99.9 % by weight of dry gypsum and 0.1-7% by weight of polysaccharide-derived cellulose are mixed, and for preparing the wet component of the gypsum blend liquid ingredients A, B, C, D are mixed, wherein ingredient A is aqueous emulsion containing methyl silicone oil, ingredient B is aqueous polymer dispersion, ingredient C is a plasticizer additive based on modified acrylate polymer and ingredient D consists of water, and ratio A: B: C: D of ingredients A, B, C, D expressed by w% in this order is 10-90: 2-50: 0.2-15: 4-70.

2. The method of claim 1, wherein the dry component of the gypsum mixture comprises 97 to 99.8 w% of gypsum and polysaccharide cellulose in the range of 0.2 to 3% by weight.

3. The process according to any one of preceding claims, wherein the aqueous emulsion containing methyl silicon oil using as ingredient A of wet component of the gypsum mixture is prepared from 20 to 90% by weight of polymethyl siloxane and 10-80w% of aqueous emulsifier containing at least 2% by weight of a long chain alcohol, preferably C10 polymer ethoxylated alcohol.

4. The process according to any of claims 1 and 2, wherein the aqueous emulsion containing methyl silicon oil using as ingredient A of wet component of the gypsum mixture is prepared from 40 to 80% by weight of polymethyl siloxane and 20-60 w% of aqueous emulsifier containing at least 2% by weight of a long chain alcohol, preferably C10 polymer ethoxylated alcohol.

5. The process according to any of claims 1 to 4, wherein the aqueous polymer dispersion using as ingredient B of wet component of the gypsum mixture is prepared from 3 to 50 w% of a blend containing acrylic acid ester, methacrylic acid ester and styrene, and 50-97% of a dispersing agent.

6. The process according to any of claims 1 to 4, wherein the aqueous polymer dispersion using as ingredient B of wet component of the gypsum mixture is prepared from 5 to 30 w% of a blend containing acrylic acid ester, methacrylic acid ester and styrene, and 70-95% of a dispersing agent.

7. The process according to any of claims 1 to 6, wherein the plasticizer additive based on modified acrylate polymer used as ingredient C of wet component of the gypsum mixture contains 0.5 to 20 w% alkali metal oxide and 0.01 to 2 w% alkali metal chloride.

8. The process according to any of claims 1 to 6, wherein the plasticizer additive based on modified acrylate polymer used as ingredient C of wet component of the gypsum mixture contains 1 to 10 w% alkali metal oxide and 0.02 to 1,2 w% alkali metal chloride.

9. The process according to any of claims 1 to 8, wherein the ratio A: B: C: D of ingredients A, B, C, D expressed by w% in this order is 20-80: 4-40: 0.5-8: 8 -40.

10. A plasterboard plate made of gypsum mixture according to any one of claims 1 to 9 arranged between lower and upper sheets of paper.

## Patentansprüche

1. Verfahren zur Herstellung einer gegen gesättigte Dämpfe dauerhaft beständige Gipsmischung, z. B. zur Herstellung von Gipskartonplatten,
umfassend den Schritt des Herstellens einer trockenen Komponente einer Gipsmischung durch Mischen von trockenem Gips mit einer pulverförmigen Beimischung,
dann Herstellen einer feuchten Komponente der Gipsmischung durch Mischen von flüssigen Chemikalien und Wasser,
und Mischen der so hergestellten trockenen und nassen Komponenten;
**dadurch gekennzeichnet, dass**
zur Herstellung der trockenen Komponente der Gipsmischung
93-99,9 Gew. % trockener Gips und 0,1-7 Gew. % von Polysaccharid abgeleiteter Cellulose gemischt werden
und zur Herstellung der feuchten Komponente der Gipsmischung flüssige Bestandteile A, B, C, D gemischt werden,
wobei Bestandteil A eine wässrige Emulsion ist, die Methylsiliziumöl enthält,
Bestandteil B eine wässrige Polymerdispersion ist,
Bestandteil C ein Weichmacheradditiv auf der Basis eines modifizierten Acrylatpolymers ist und Bestandteil D aus Wasser besteht,
und das Verhältnis A:B:C:D der Bestandteile A, B, C, D, ausgedrückt in Gew. %, beträgt in dieser Reihenfolge 10-90: 2-50: 0,2-15: 4-70.

2. Verfahren nach Anspruch 1, wobei die trockene Komponente der Gipsmischung 97 bis 99,8 Gew.% Gips und Polysaccharid Cellulose im Bereich von 0,2 bis 3 Gew.% umfasst.

3. Verfahren nach einem der vorhergehenden Ansprüche, wobei die wässrige Emulsion, die Methylsiliziumöl als Bestandteil A der feuchten Komponente der Gipsmischung enthält, aus 20 bis 90 Gew. % Polymethylsiloxan und 10 bis 80 Gew. % wässrigem Emulgator, der mindestens 2 Gew. % eines langkettigen Alkohols, vorzugsweise C10-Polymerethoxylalkohol enthält, hergestellt wird.

4. Verfahren nach einem der Ansprüche 1 und 2, wobei die wässrige Emulsion, die Methylsiliziumöl als Bestandteil A der feuchten Komponente der Gipsmischung enthält, aus 40 bis 80 Gew. % Polymethylsiloxan und 20 bis 60 Gew. % wässrigem Emulgator, der mindestens 2 Gew.% eines langkettigen Alkohols, vorzugsweise C10-Polymerethoxylalkohol enthält, hergestellt wird.

5. Verfahren nach einem der Ansprüche 1 bis 4, wobei die wässrige Polymerdispersion, die als Bestandteil B der feuchten Komponente der Gipsmischung verwendet wird, aus 3 bis 50 Gew.% einer Mischung, die Acrylsäureester, Methacrylsäureester und Styrol enthält, und 50-97% eines Dispergiermittels hergestellt wird.

6. Verfahren nach einem der Ansprüche 1 bis 4, wobei die wässrige Polymerdispersion, die als Bestandteil B der feuchten Komponente der Gipsmischung verwendet wird, aus 5 bis 30 Gew.% einer Mischung, die Acrylsäureester, Methacrylsäureester und Styrol enthält, und 70-95% eines Dispergiermittels hergestellt wird.

7. Verfahren nach einem der Ansprüche 1 bis 6, wobei das Weichmacheradditiv auf der Basis eines modifizierten Acrylatpolymers, das als Bestandteil C der feuchten Komponente der Gipsmischung verwendet wird, 0,5 bis 20 Gew. % Alkalimetalloxid und 0,01 bis 2 Gew. % Alkalimetallchlorid enthält.

8. Verfahren nach einem der Ansprüche 1 bis 6, wobei das Weichmacheradditiv auf der Basis eines modifizierten Acrylatpolymers, das als Bestandteil C der feuchten Komponente der Gipsmischung verwendet wird, 1 bis 10 Gew. % Alkalimetalloxid und 0,02 bis 1,2 Gew. % Alkalimetallchlorid enthält.

9. Verfahren nach einem der Ansprüche 1 bis 8, wobei das Verhältnis A:B:C:D der Bestandteile A, B, C, D, ausgedrückt durch Gew. % in dieser Reihenfolge, 20-80: 4-40: 0,5-8: 8 -40 beträgt.

10. Gipskartonplatte aus Gipsmischung nach einem der Ansprüche 1 bis 9, angeordnet zwischen unteren und oberen Papierbögen.

## Revendications

1. Procédé de production d'un mélange de gypse résistant en permanence aux vapeurs saturées, par ex. pour la production de plaques de plâtre,
comprenant l'étape de préparation d'un composant sec d'un mélange de gypse
en mélangeant du plâtre sec avec un adjuvant poudreux,
puis de préparer un composant humide du mélange de plâtre en mélangeant des produits chimiques liquides et de l'eau,
et en mélangeant les composants secs et humides ainsi préparés;
**caractérisé en ce que**
pour produire le composant sec du mélange de plâtre 93 à 99,9% en poids de plâtre sec et 0,1 à 7% en poids de cellulose dérivée de polysaccharide sont mélangés,
et pour produire le composant humide du mélange de plâtre les ingrédients liquides A, B, C, D sont mélangés,
dans lequel l'ingrédient A est une émulsion aqueuse contenant de l'huile de méthyl silicone, l'ingrédient B est une dispersion aqueuse de polymère, l'ingrédient C est un additif plastifiant à base de polymère d'acrylate modifié et l'ingrédient D est constitué d'eau,
et le rapport A:B:C :D des ingrédients A, B, C, D, exprimé en % en poids dans cet ordre, est 10-90: 2-50: 0,2-15: 4-70.

2. Procédé selon la revendication 1, dans lequel le composant sec du mélange de gypse comprend 97 à 99,8% en poids de gypse et de polysaccharide cellulose dans la gamme de 0,2 à 3% en poids.

3. Procédé selon l'une quelconque des revendications précédentes, dans lequel l'émulsion aqueuse, qui contient de l'huile de méthyl silicone comme composant A du composant humide du mélange de gypse, est préparée de 20 à 90% en poids de polyméthylsiloxane et de 10 à 80 en poids d'émulsifiant aqueux contenant au moins 2% en poids d'un alcool à longue chaîne, de préférence un alcool éthoxylé polymère C10.

4. Procédé selon l'une quelconque des revendications précédentes, dans lequel l'émulsion aqueuse, qui contient de l'huile de méthyl silicone comme composant A du composant humide du mélange de gypse, est préparée de 40 à 80% en poids de polyméthylsiloxane et de 20 à 60 en poids d'émulsifiant aqueux contenant au moins 2% en poids d'un alcool à longue chaîne, de préférence un alcool éthoxylé polymère C10.

5. Procédé selon l'une quelconque des revendications 1 à 4, dans lequel la dispersion aqueuse de polymère utilisant comme ingrédient B du composant humide du mélange de gypse est préparée de 3 à 50% en poids d'un mélange contenant un ester d'acide acrylique, un ester d'acide méthacrylique et du styrène, et 50 à 97% d'un agent dispersant.

6. Procédé selon l'une quelconque des revendications 1 à 4, dans lequel la dispersion aqueuse de polymère utilisant comme ingrédient B du composant humide du mélange de gypse est préparée de 5 à 30% en poids d'un mélange contenant un ester d'acide acrylique, un ester d'acide méthacrylique et du styrène, et 70 à 95% d'un agent dispersant.

7. Procédé selon l'une quelconque des revendications 1 à 6, dans lequel l'additif plastifiant à base de polymère d'acrylate modifié utilisant comme ingrédient C du composant humide du mélange de gypse contient 0,5 à 20% en poids d'oxyde de métal alcalin et 0,01 à 2% en poids de chlorure de métal alcalin.

8. Procédé selon l'une quelconque des revendications 1 à 6, dans lequel l'additif plastifiant à base de polymère d'acrylate modifié utilisant comme ingrédient C du composant humide du mélange de gypse contient 1 à 10% en poids d'oxyde de métal alcalin et 0,02 à 1,2% en poids de métal alcalin. chlorure.

9. Procédé selon l'une quelconque des revendications 1 à 8, dans lequel le rapport A:B:C:D des ingrédients A, B, C, D, exprimé en % en poids dans cet ordre, est 20-80: 4-40: 0,5-8: 8 -40.

10. Plaque de plâtre constituée d'un mélange de gypse selon l'une quelconque des revendications 1 à 9, disposée entre des feuilles de papier inférieure et supérieure.
